# EUROPEAN PATENT SPECIFICATION

(11) **EP 3 593 107 B1**
(45) Date of publication and mention of the grant of the patent: **29.07.2020**
(21) Application number: 18710442.7
(22) Date of filing: 08.03.2018
(51) Int. Cl.: G01N 1/06, G01N 1/31

(54) **DEVICE FOR PROCESSING 3D BIOPSY TISSUE**
VORRICHTUNG ZUM VERARBEITEN VON 3D-BIOPSIEGEWEBE
DISPOSITIF DE TRAITEMENT DE TISSU DE BIOPSIE 3D

(30) Priority: 10.03.2017 EP 17160278
(43) Date of publication of application: 15.01.2020
(73) Proprietor: Koninklijke Philips N.V., 5656 AG Eindhoven (NL)
(72) Inventor: VAN DER ZAAG, Pieter, Jan, 5656 AE Eindhoven (NL); VULDERS, Roland, Cornelis, Martinus, 5656 AE Eindhoven (NL); CLOUT, Danielle, Elisa, Willemine, 5656 AE Eindhoven (NL)
(74) Representative: Philips Intellectual Property & Standards
(86) International application number: PCT/EP2018/055757
(87) International publication number: WO 2018/162640

(56) References cited:
- WO-A1-2016/001126
- WO-A1-2017/109201
- US-A- 5 354 370
- US-A1- 2002 029 006
- US-A1- 2009 011 399
- US-A1- 2013 224 791

## Description

### FIELD OF THE INVENTION

The invention generally relates to a system for processing tissue in its 3D shape, for example as obtained by a biopsy. Particularly, the invention relates to a device and method for processing biopsy sample by at least one tissue proceesing fluid while the 3D biopsy sample is accommodated in a biopsy tube so that the integrity of an extracted tissue volume is maintained.

### BACKGROUND OF THE INVENTION

For the proper analysis of tumours and defining the appropriate treatment, detailed information on a tumour may be needed. First the presence and position of a potential tumour may be identified through medical imaging.

Subsequently a biopsy may be taken to assess whether or not the lesion is benign or malignant through pathology. For positioning the biopsy device (usually a needle with a shaft having a lateral recess, and an outer tubular member) accurately in the suspicious tissue, the correct location is commonly determined using image guidance such as ultrasound, MRI or X-ray and/or combinations of these. Following an extraction of biopsy tissue out of a body, the tissue may be subjected to a staining fluid in an open receptacle.

Finally molecular diagnostic (MDx) analysis of the tissue may be done to determine which molecular mutations and molecular pathway drive the tumor in order to arrive at a proper treatment. In order to provide the correct molecular analysis, also tumor heterogeneity may be assessed to determine whether a single cancerous clone is responsible for the tumorous growth or whether multiple clones are present, so that possibly multiple biological pathways drive tumor growth and a combination of drugs needs to be given.

In the case of neo-adjuvant treatment, especially in case of a large tumor and in case of treatment with targeted drugs which target signal transduction pathways, the first diagnostic biopsy can be handled in a standard manner, however additional biopsies are often needed to assess the heterogeneity of the tumor with respect to the underlying biology.

Furthermore, it is a problem that typically staining of a 3D tissue sample, i.e. of a not-sliced sample, takes comparatively long as staining occurs through diffusion. The tissue sample may be located in a bath out of a staining fluid, with the staining fluid completely surrounding the tissue sample so that staining material will slowly diffuse into the tissue from all sides.

EP 2 614 778 A2 describes a tissue harvesting apparatus which can prevent a worker from being stabbed with a needle tip of a needle tube at the time of disposal. Tissue may be sucked into the tube for harvesting the tissue from a body, and the tissue may be rinsed out of the tube for further processing by pumping a liquid to the tube.

WO2016/001126 A1 describes a system including a sample holder for holding a biopsy with a wall that is at least localy transparent and at least locally permeable for reagents. The system has a bearing for accomodating the sample holder, and two openings in open configuration to allow processing fluid flowing into one of the openings, through the sample holder, and out of the other opening.

### SUMMARY OF THE INVENTION

In view of the above mentioned problems, it can be seen as a general object of the invention to process an intact 3D tissue sample so as to allow an appropriate analysis of tissue in a region of interest.

This and further objects are solved by the subject-matter of the respective independent claims. Further embodiments are described in the dependent claims. This is in particular useful if staining is performed throughout the whole sample, meaning that, for instance, antibodies penetrate for 500 micron or more into the tissue.

A main aspect may be seen in that a tissue processing system is provided with an adjustable opening like an (iris) diaphragm, such that firstly a perfusion flow of a tissue processing fluid through the biopsy sample may be allowed and then at least a section of the processed intact biopsy sample can be moved through the completely open opening and out of the tube for further molecular diagnostic (MDx) analysis.

Thus, the adjustable opening may initially be smaller than the inner diameter of the tissue/biopsy tube so as to effect the perfusion staining i.e. assuring that the liquid can run through the tissue. However, to remove the tissue of interest from the biopsy tube the diaphragm should be able to open up, i.e. being larger than the inner tube or biopsy tube diameter so that either the tissue can be moved out (e.g. by a plunger) or the tube itself can be moved out.

In the context of the embodiments described herein, "perfusion" of biopsy tissue is intended, wherein "perfusion" is to be understood as actively pressing a liquid like a processing agent onto and through a biopsy tissue so as to achieve a much faster penetration of the processing agent into the tissue, i.e. to achieve a faster staining and/or washing process. Consequently, the pressure of the liquid on the tissue should be sufficiently high to force the liquid to penetrate into and through the tissue. It is noted that the term "forcing" as used herein shall imply that the fluid not just flows to the tissue for example due to gravity. But is actively pressed through a fluid channel in direction to and onto the tissue. The "perfusion" is facilitated when the biopsy tissue does not move and even blocks the flow of the processing agent, for example when occupying most of the cross section of an inner space of a biopsy tube.

Using an adjustable opening to perform these two steps (stain and extraction from tube) is advantageous because the staining step according to a "perfusion" mode requires that the tissue be retained in position in the tube while also letting the liquid flow under relatively high pressure through the tissue and exit from the tube, and because the extraction step requires that the opening be much bigger than in the first step. Therefore, the adjustable size of the opening, e.g. the diaphragm is an advantage in this respect. Note besides, that for the first step where one must control the pressure of the flow, the adjustable opening advantageously provides an adjustment control by an adjustment of the size of the opening.

Using a biopsy tube in the biopsy taking, staining/analysing process and imaging has at least one of the following advantages:
- The biopsy stays intact and original tissue architecture is maintained.
- It is easier for surgical staff to remove a tube then a loose piece of tissue which has to be picked up- for further steps by a pair of tweezers.
- The tube can be put directly in a staining station.
- Staining using 'perfusion' through the tissue seems to be progressing 100x times faster.
- Registry with the original medical image is possible.

In general, a system for processing a 3D tissue sample in accordance with an embodiment, comprises a reservoir for at least one tissue processing fluid, a supply line for supplying the at least one tissue processing fluid from the reservoir to a 3D biopsy sample, an adjustable opening being adjustable between a closed configuration and an open configuration, and a retainer for a biopsy tube with two open ends.

The retainer may be configured to hold the biopsy tube between the supply line and the adjustable opening, such that the tissue processing fluid can flow from the reservoir, through the supply line under pressure into a first open end of the biopsy tube, through the biopsy tube, and out of the second open end of the biopsy tube and through the adjustable opening.

The open configuration of the adjustable opening may have a cross section which is at least as great as a cross section of an open end of a biopsy tube. It will be understood that the adjustable opening may be adjusted so as to form an opening with a cross section being smaller than the cross section of the biopsy tube. In such a configuration, the tissue processing fluid may flow out of that opening but the 3D biopsy sample may be held inside the tube. Consequently, any air or liquids may escape the tube at the adjustable opening. This enables for example an even staining of the tissue. It will be understood that the tissue is preferably arranged within the tube such that no continuous fluid path beside the tissue is formed, i.e. such that no leakage occurs. For example, the tissue may fully occupy an entire cross-section of the tube, or at least most of the cross section of the tube. A very efficient perfusion of the sample is thus performed.

As used herein, the term 'tube' encompasses any container with at least two openings and an inner space. In particular, the used term does not prescribe any shape of the cross section or any dimensions. For example, the openings may be located at the ends opposite to each other. A direction from one open end to another open end may be denoted as longitudinal direction. According to another example at least one opening may be located in a side surface of the tube. The inner space of the tube may be adapted to receive and retain a 3D tissue sample for processing the same. It shall also be adapted to be used in a biospy needle, like one disclosed in WO2016075061A1. The tube maybe used to extract a tissue sample out of a patient's body so that the tissue is already in the tube when the tube is placed in the tube retainer for processing the tissue inside the tube. However, the tissue may also be inserted into the tube outside the patient's body. Preferably, the tissue is placed in the tube such that no or at least limited leakage of tissue processing fluid may occur in the tube (because no continuous fluidic path beside the tissue exist from one end of the sample to the other within the tube).

According to an embodiment, the system may comprise a plurality of reservoirs for tissue processing fluids and a fluid manifold connecting one of the plurality of reservoirs to the supply line. By the provision of several reservoirs (which may also be denoted as sub-reservoirs of a main reservoir) and thus several tissue proceesing fluids, the 3D biopsy sample in the biopsy tube may be proccessed by different processing agents or fluids in a sequence, without changing the set-up, i.e. without removing the biopsy tube from the retainer. For example, the tissue processing fluid may be a clearing agent or a staining agent. The tissue processing agent may be a clearing agent such as BABB which is a 1:1 or 1:2 mixture of benzyl ethanol and benzyl benzoate, and/or a staining agent, depending on the intended tissue processing and thus on the intended kind of analysis of the processed tissue sample. The processing agent may also comprise paraffine for embedding the biopsy tissue. These and further examples of agents can be taken from T.Yokomizo et al. "Whole-mount three-dimensional imaging of internally localized immunistained cells within mouse embryos" (2012, Nature Protocols Vol. 7 p. 421-431 America Inc, nprot 2011.441), K. Chung et al. "Structural and molecular interrogation of intact biological systems" (2013, Nature Vol. 497, p. 332-339), D.S.Richardson et al. "Clarifying Tissue Clearing" (2015, Cell 162, Elsevier Inc. p. 246-257). In an embodiment which may avoid using too much expensive reagent, the staining liquid may be recirculated through the tissue using a pumping device like for example a peristalic pump.

According to an embodiment, the regions of interest (ROIs) may be extracted physically from the tube for further molecular analysis, for example by optical transmission microscopy. A system and method enabling extraction of the ROI from a 3D biopsy sample may thus further comprise a plunger adapted to push biopsy tissue out of the biopsy tube and through the adjustable opening, so that the biopsy sample may be sliced outside the biopsy tube. Alternatively, the biopsy tube as a whole may be pushed through the adjustable opening. In that case, the 3D biopsy sample may be cut within and together with the biopsy tube.

According to an embodiment, the system may further comprise a cutting element for cutting the biopsy tissue. A cutting element may, for example, be a laser, a microtome cutter, or a diaphragm.

The microtome cutter may have one cutting edge of a blade and a sample slice is generated by a movement of the blade from one side of the sample to an opposite side of the sample.

The diaphragm typically consists of a plurality of elements which are arranged on a circumference of, for example, a ringlike structure, and by a more or less simultaneous swiffeling movement of the elements, the ringlike structure may be closed. Thus, a diaphragm may be used to adjust a cross section of an opening, i.e. to realize the adjustable opening. With the edges of the swiffeling elements being sharp, a cutting may additionally be realized by a diaphragm.

According to an embodiment, the system may further comprise a pumping device. The pressure under which the tissue processing fluid is supplied to the biopsy tube should be higher than atmospheric pressure. The pressure may for example be supplied with a pressure between 2 bar and 6 bar, preferably between 4 bar and 5 bar. For a block of kidney tissue, the prefered range may be between 1.1 bar and 3 bar, and more preferably between 1.1 bar and 2 bar.

In any case, the person skilled in the art will easily understand that a right pressure will depend on the tissue to be processed. Thus a choice for the right pressure delivered by the pump may have to take into account the fluidic resistance of the tissue. In this effect, the person skilled in the art may for instance use mathematical models to determine a right pressure or perform trial experiments with the type of tissue in question. Indeed, the pressure of the staining liquid on the tissue sample should only be so high that it would not cause any tissue deformation or damage. On another hand, this pressure should be sufficiently high to enable processing the sample under the perfusion mode.

According to an embodiment may a tissue processing agent be forced through the fluid channel and into the tube over a predetermined time, preferably over at least 10 minutes. This takes into account that the penetration of the tissue processing fluid into the tissue cannot be expected as occurring immediately. In an automated process, in which a plurality of tubes with tissue samples can be processed, the duration of the supplying of the tissue processing fluid may be predetermined. Alternatively, the progress of the processing of the tissue, for example the staining, may be monitored so as to detect whether the intended result is achieved.

According to a further embodiment, the system may further comprise an analyzing unit for analyzing the biopsy tissue processed by the at least one tissue processing fluid or agent. In an embodiment in which the tube is made of a transparent material, it is possible to optically analyze the tissue sample directly in the tube, i.e. without taking the tissue sample out of the tube. The optical analysis may thus be performed directly in the processing (e.g. staining) station. In other words, an optical analysis device maybe part of the system according to an embodiment. For example, it may be determined by means of the analysis device whether a staining has been completely achieved so that further steps in the proceeding(s) may be performed. This may even help controlling costs as the antibodies/staining liquids are often expensive chemical compounds.

It is noted that the tube may be made of a transparent material like, for example, glass or a hard plastic material. According to an embodiment, the biopsy tube may be coated with a silicone-coating which may reduce the friction within the biopsy tube. Furthermore, the biopsy tube may be made from a material having mechanical properties comparable with paraffin, so that the extracted biopsy tissue may stay within the biopsy tube during staining and possibly for cutting slices from the biopsy so as to investigate the tissue by a microscope.

According to an embodiment, the biopsy tube may have a length between, between 3-30 mm, more typically between 5 mm and 20 mm and ideally between 5 and 15 mm and may have an outer diameter up to 2 mm, with an inner diameter up to 1.6mm. Preferably, the tube may have an outer diameter up to 1mm. According to an embodiment, the outer diameter of the tube may be 0.5 mm. Assuming that the tissue fills a majority of the inner space within the tube, the tissue sample may have the shape of a post with a length between 5 mm and 20 mm and a diameter between 0.25 mm and 1.6 mm, with the cross section of the post being circular, oval or angular.

According to another aspect, a method of processing a 3D tissue sample is suggested, comprising the steps of retaining a biopsy tube including the 3D tissue sample such that a first open end of the biopsy tube is arranged at a supply line for supplying a tissue processing fluid and that a second open end of the biopsy tube is arranged adjacent to an adjustable opening, and forcing a tissue processing fluid from a reservoir through the supply line and the first open end of the biopsy tube into the biopsy tube and out of the second open end of the biopsy tube and through the adjustable opening. A partially open configuration of the adjustable opening may allow to hold the tissue sample inside the tube but also to let processing fluid exit the tube at the side of the adjustable opening.

According to an embodiment, one tissue processing fluid out of a plurality of tissue processing fluids may be selected. Providing a plurality of reservoirs for different tissue processing fluids facilitates an automatic process utilizing a sequence of different tissue processing fluids. That is, the system may comprise a processing unit for automatically controlling the supply of tissue processing fluid to the 3D biopsy sample.

The method may further comprise the step of pushing or shifting the 3D tissue sample out of the biopsy tube and through the adjustable opening. It will be understood that this step maybe performed automatically, but also manually. In particular, when a region of interest (ROI) is to be extracted from the biopsy sample, the pushing out of the biopsy sample through the adjustable opening may be controlled and synchronized with a cutting of the 3D tissue sample. It is noted that the pushing out of the biopsy sample may be performed by a plunger.

According to an embodiment, the method may further comprise the step of analyzing the processed 3D tissue sample, for example by molecular diagnostics (MDx).

Summarizing, a main advantage of using a biopsy tube may be seen in that the biopsy sample stays intact and 3D tissue architecture structures in the biopsy can be observed. This provides the best position from which the further MDx analysis may be done.

Linking the location of these additional biopsies to the location on the imaging modalities is important for the correlation of any pathology and MDx results to the tumor location on medical imaging data/pictures. Linking all this information is a key part of an overall oncology strategy. Moreover, a tumor heterogeneity map can be made for determining the appropriate drug cocktail as well as following the tumor response via imaging.

The aspects defined above and further aspects, features and advantages of the present invention may also be derived from the examples of embodiments to be described hereinafter and are explained with reference to examples of embodiments. The invention will be described in more detail hereinafter with reference to examples of embodiments but to which the invention is not limited.

### BRIEF DESCRIPTION OF THE DRAWINGS

Fig 1 illustrates a device for processing a 3D tissue sample.
Figs. 2a to 2d showing a sequence of processing a biopsy sample by different tissue processing fluids.
Figs. 3a to 3e illustrate steps of cutting a region of interest out of a 3D biopsy sample according to a first embodiment.
Figs. 4a to 4e illustrate steps of cutting a region of interest out of a 3D biopsy sample according to a second embodiment.
Fig. 5 shows alternative embodiments of diaphragms.
Fig. 6 is a flowchart of a method of processing a 3D biopsy sample.

The illustration in the drawings is schematically only and not to scale. It is noted that similar elements are provided with the same reference signs in different figures, if appropriate.

### DETAILED DESCRIPTION OF EMBODIMENTS

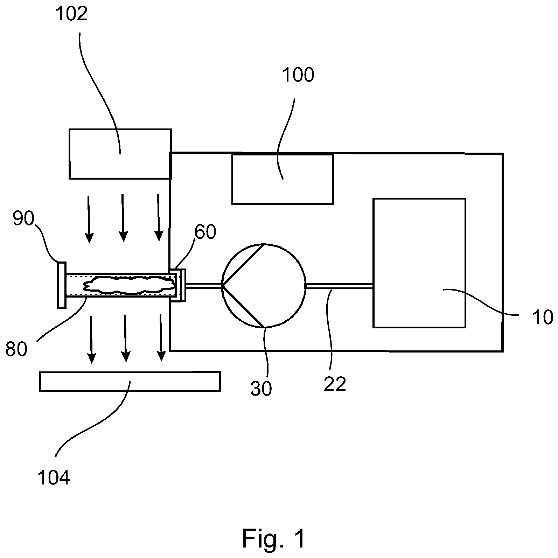

Figure 1 illustrates a device or processing station for processing tissue extracted from a body by a biopsy tube 80. The processing station comprises a tube receptacle 60, a pumping device 30 as well as a reservoir 10 for a tissue processing liquid or fluid. One end of the tube 80 may engage with the tube receptacle 60.

The liquid or fluid in the reservoir 10 may be suitable for treating the tissue in the tube 80. For example, the liquid or fluid may be suitable for clearing the cellular structures of the tissue. Otherwise, the fluid or liquid may be for staining the tissue. When activated, the pumping device 30 will suck at its entering side the liquid or fluid from the reservoir 10 through the supply line 22, and will supply the liquid or fluid under pressure on its exit side to the biopsy tube 80.

A seal like an O-ring 70 may be located at the tube receptacle 60 so as to seal a fluid path from the pumping device 30 into the end of the tube 80.

Although it is shown in figure 1 that the tube 80 is retained at its end portion in the tube receptacle 60, it will be understood, that the tube receptacle may also engage the tube 80 at any other portion of the tube. In any case, the second end of the tube 80 is arranged at an adjustable opening 90 so as to allow air or fluid to exit the tube as soon as the liquid or fluid which is supplied under pressure at the tube receptacle 60 to the first end of the tube 80.

It is noted that the adjustable opening 90 may either be a part of the processing station or a part of the tube 80. In any case, the adjustable opening 90 may be a single use element, i.e. may configured to be removably attached to the processing station or to the tube. According to an embodiment, in which the adjustable opening 90 is a part of the tube 80, the adjustable opening may have an outer diameter being comparable or even equal to an outer diameter of the tube. The adjustable opening may also have an engagement structure allowing an adjustment of the opening by means of a separate element or tool, for example by a corresponding engagement structure at the processing station.

Further shown in figure 1 is a device for investigating or analysing the tissue in the tube 80. When the tube 80 is made of a transparent material an optical imaging or scanning of the tissue enclosed in the tube 80 may be possible. Consequently, the device for analysing the biopsy tissue may include a radiation source 102 being arranged relative to the tube 80 and being configured so as to apply a radiation, for example light with a predetermined frequency to the tube 80. The radiation passing through the tube and the tissue within the same may be detected by a radiation detector 104 so as to provide images or at least data allowing further investigation or analyzing of the tissue. An improved detection of the radiation may be achieved by providing a lens within the light path between the tube 80 and the radiation detector 104.

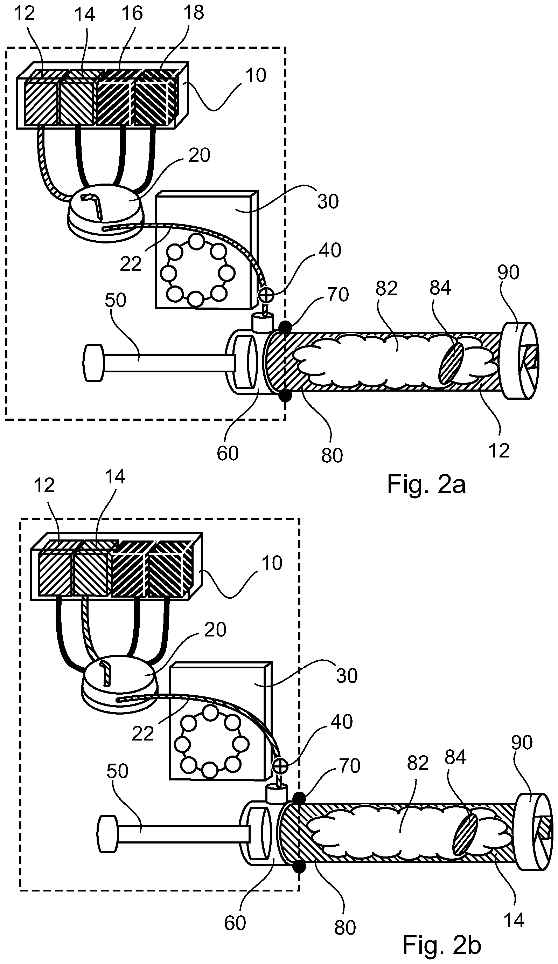

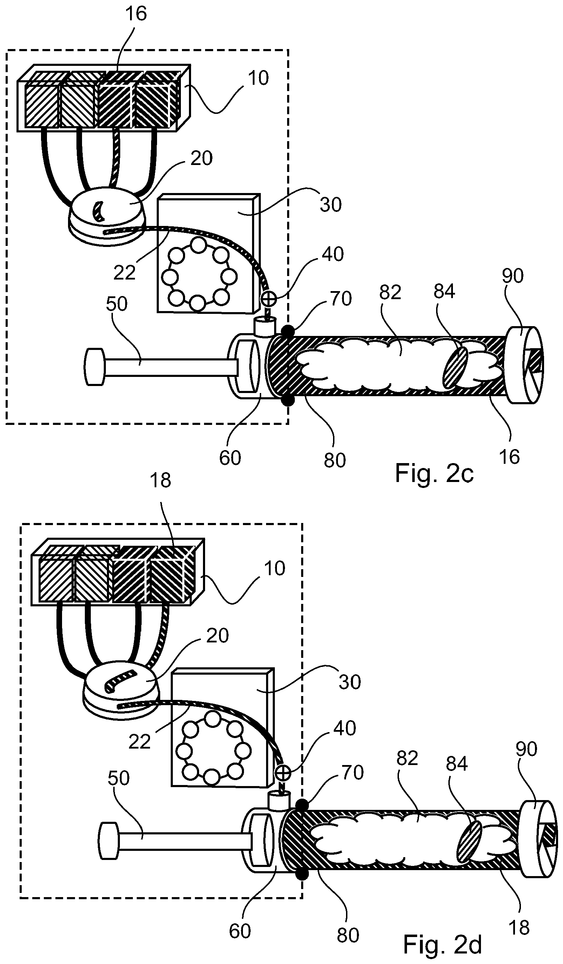

In the sequence of figures 2a-2b-2c-2d, a processing of a tissue sample 82 with a region of interest 84 in a biopsy tube 80 is depicted. According to that embodiment, the device for processing biopsy tissue comprises a reservoir for four tissue processing fluids 12, 14, 16, 18, a manifold 20, a pumping device 30, a valve 40, a retainer 60 for a biopsy tube 80, a plunger 50 and an adjustable opening 90. The reservoir 10 includes in this case, for example, four sub-reservoirs, wherein in each of these sub-reservoirs one tissue processing fluid is accommodated. All four sub-reservoirs are connected to the manifold 20 so that the manifold may connect one of the sub-reservoirs with the supply line 22. The supply line 22 run through the pumping device 30, this case a peristaltic pump, to the tube receptacle 60. In the supply line 22, a valve 40 may be arranged, which valve allows a blocking of the supply line 22. At the tube receptacle 60, a O-ring 70 maybe provided which may facilitate the receiving of a biopsy tube 80 in the tube receptacle 60. The biopsy tube 80 is held in the tube receptacle 60 so that processing fluid from the supply line 22 can enter the end of the biopsy tube. At the opposed end of the biopsy tube 80, an adjustable opening 90 is provided, which adjustable opening is in a partially open configuration in these figures allowing processing fluid to flow out of that end of the biopsy tube 80.

As will be described in more detail below, a plunger 50 is arranged at the end of the tube receptacle 60. When valve 40 closes the supply line 22 and the adjustable opening 90 completely open, the plunger 50 may push the biopsy sample out of the biopsy tube 80.

In figure 2a, the manifold 20 is adjusted so as to connect the 1^{st} sub-reservoir including the processing fluid 12 with the supply line 22, and the tissue processing fluid 12 is pressed by the pumping device 30 through the biopsy tube 80.

In figure 2b, the manifold 20 is switched so as to connect the 2^{nd} sub-reservoir including the tissue processing fluid 14 with the supply line 22. The 2^{nd} tissue processing fluid 14 may be different to the 1^{st} tissue processing fluid 12, so that different staining can be performed, for example to ensure that the ROI 84 in the biopsy sample is sufficiently stained, by pressing the tissue processing fluid 14 through the biopsy tube 80.

Usage of specific stains such as but not limited to specific antibodies, peptides and or FISH probes may ensure that the ROI in the biopsy sample could be visualized. Consequently, the manifold 20 may be switched to a position in which the sub-reservoir with the tissue processing fluid 16 is connected with the supply line 22, allowing to pump the 3^{rd} tissue processing fluid 16 through the biopsy tube 80 and thus through the biopsy sample 82.

Finally, as shown in figure 2d, a washing step may be performed to release for example a specific bound dye. Here, the sub- reservoir including the tissue processing fluid 18 is connected by the manifold 20 with the supply line 22 for flowing under pressure through the biopsy tube 80. Since the sample is still in place, visualisation can take place by imaging the sample with for instance (fluorescent) microscopy in order to determine the location of the ROI. Upon detection of the ROI 84, the valve 40 may be closed and the sample can be pushed out of the biopsy tube 80 by utilizing the plunger 50, wherein the adjustable opening 90 is in its completely open configuration.

In the following, the separation of the region of interest 84 out of the biopsy sample 82 by cutting the biopsy sample is described.

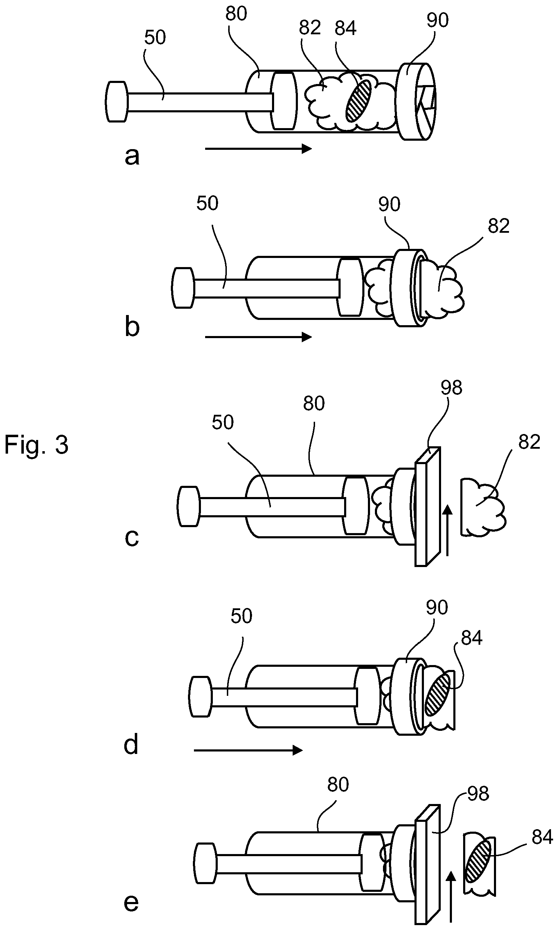

Figure 3 illustrates an embodiment of a device for processing a 3D biopsy sample, in particular the functional relationship of the plunger 50, the biopsy tube 80 and the adjustable opening 90 together with an cutting element 98. Here, the device has a diaphragm 90 as an adjustable opening and a plunger 50, the plunger 50 is configured to push the tissue sample 82 (figure 3a) out of the biopsy tube 80, i.e. through the adjustable opening 90 (figure 3b), until the position of the front of the ROI meets a cutting element 98 (e.g. a microtome-knife) in figure 3c. The cutting action maybe performed with the cutting element 98 like a microtome knife placed in front of the adjustable opening 90 thereby removing tissue adjacent the region of interest. This is followed by continued pushing the sample until the end of the ROI 84 meets the knife (figure 3d) so that the region of interest can be selectively cut (figure 3e), i.e. the ROI 84 can be substantially separated from the rest of the biopsy sample 82. In other words, the ROI 84 in the biopsy sample is pushed forward via the plunger 50 when the diaphragm 90 is opened, and when the ROI is pushed completely out of the tube 80, a cutting action is performed to release the ROI for further processing.

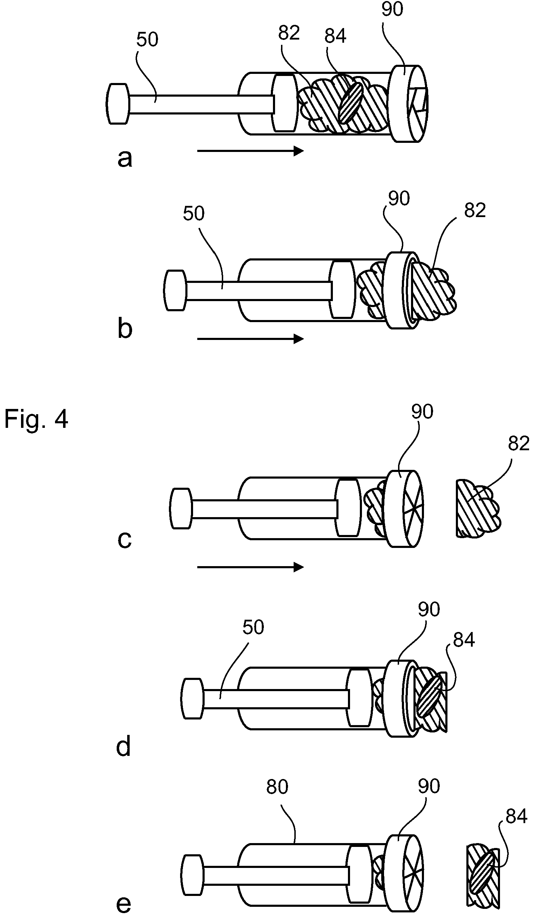

In figure 4, and alternative embodiment to the figure 3 embodiment as shown. In this embodiment, an iris diaphragm 90 is acting both as a tissue retainer during the above described processing steps and as a cutting mechanism. Actually, the iris diaphragm adds a third function (retain tissue, allow extraction from tube, cut). When nearly closed, the tissue sample remains in the same location and staining is performed via perfusion as depicted in figures 2a-2d. Upon staining the sample can be pushed out of the biopsy tube 80 by means of a plunger 50. Subsequently the sample can be cut by closing the diaphragm 90. The diaphragm itself can have at least one element with an sharp edge and thus can be seen as a knife. It is noted, that the elements of the diaphragm may be made from different materials such as steel, ceramics, alloys or diamond. Figure 4a to figure 4e show the mode of action. Upon staining by perfusion, the sample is transported via a plunger 50 further through the biopsy tube 80 by opening the diaphragm 98 (figure 4b), when reaching the region of interest 84, the diaphragm 98 will close completely thereby performing a cutting action to remove excessive tissue (figure 4c). When reaching the region of interest 84, the diaphragm can be opened subsequently and the sample 82 is further transported (figure 4d). The ROI 84 may selectively be cut (figure 4e). Further processing can consist of classical pathology or more sophisticated analysis methods such as but not limited to PCR, sequencing and MDx analysis.

According to an alternative embodiment, a laser or microtome cutter maybe used to cut through the glass/plastic of the biopsy tube 80 (when the tube itself is pushed). The glass/plastic material of the biopsy tube 80 may be removed in a stage where the tissue/cell are lysed to release the RNA and/or DNA for molecular analysis.

According to another embodiment, the ROI may be cut in multiple/several slices as a way to measured changes or heterogeneity among these sliced sections. This is facilitated as more i.e. enough sample exists in the 3D biopsy sample. With the traditional thin coupes used in 2D pathology the slices are too thin (4 µm) to have sufficient material for PCR or sequencing MDx analysis. Hence typically cells collected from the various slides are combined to have sufficient input for these processes.

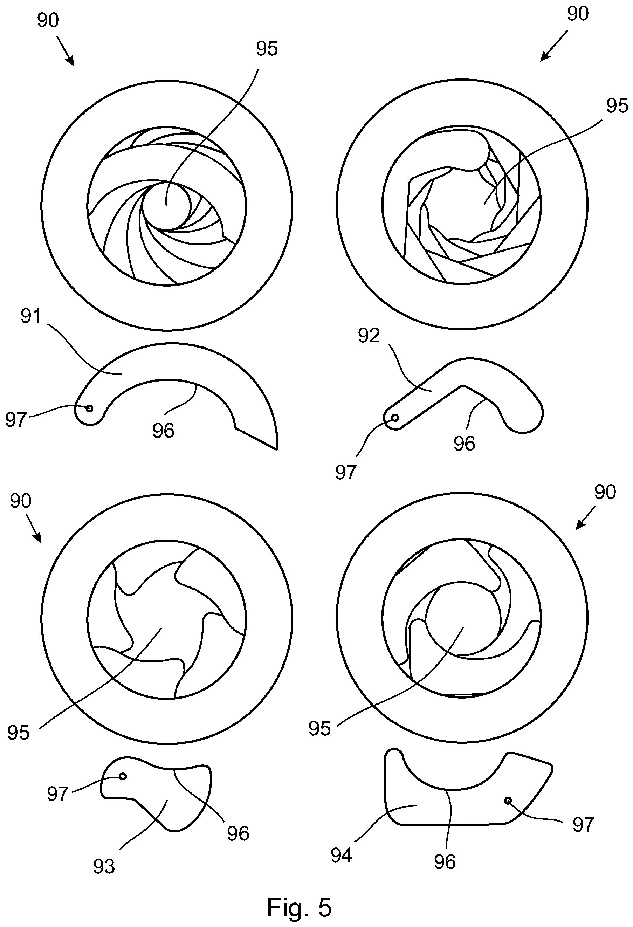

In figure 5, different embodiments of adjustable openings 90, i.e. diaphragms are shown, wherein these embodiments differ by the form of the diaphragm elements. For example, the elements 91 and 92 of the upper embodiments are sickle-shaped, with the element 92 further having a buckling. The diaphragm element 93 in the lower left embodiment may be described as wedge-shaped and the element 94 in the lower right embodiment is curved on an inner side and has a straight outer side. All these diaphragm elements include a pivot point 97. Each of the diaphragms 90 is formed by a plurality of equal diaphragm elements, and a simultaneous pivoting movement of these elements results in more or less circular openings 95 so that a cross section of such openings 95 is adjustable between a completely closed configuration and a completely open configuration.

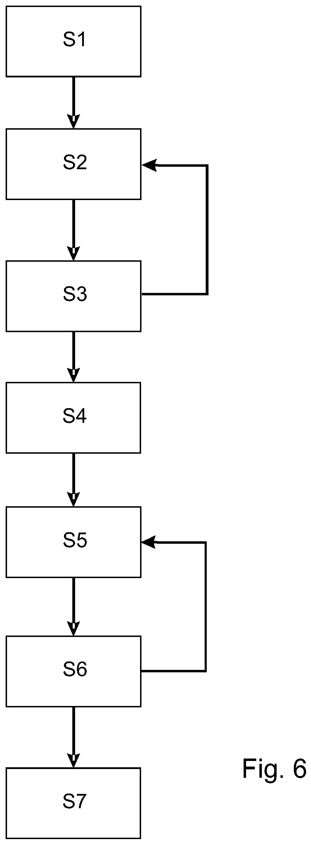

Figure 6 is a flowchart illustrating steps of processing a biopsy tissue sample in accordance with an embodiment. It will be understood that the illustrated method steps are main steps which can be divided into sub-steps. Furthermore, there may be sub-steps between the major steps.

In step S1, a biopsy tube including a 3D tissue sample may be received in the tube receptacle 60, such that a first open end of the biopsy tube is arranged at a supply line 22 for supplying a tissue processing fluid 12, 14, 16, 18, and such that a second open end of the biopsy tube 80 is arranged adjacent to an adjustable opening 90.

In step S2, one tissue processing fluid is selected out of a plurality of tissue processing fluids. In other words, the manifold 20 is positioned so as to connect a specific sub-reservoir of the reservoir 10 with the supply line 22 to the biopsy tube 80.

In step S3, the selected tissue processing fluid is forced from the reservoir through the supply line 22 and through the first open end of the biopsy tube 80 into the biopsy tube 80, and also through through the adjustable opening 90 at the second open end of the biopsy tube 80, with the adjustable opening being in a partially open configuration.

Steps S2 and S3 may be repeated as often as necessary to perform a multistep processing of the biopsy sample with different tissue processing fluids.

In step S4, the processed, for example stained 3D tissue sample is for example optically analysed so as to identify a region of interest in the biopsy sample.

In step S5, the 3D tissue sample is shifted or pushed forward in the biopsy tube 80 in a direction to the adjustable opening and at least partially through the adjustable opening 90.

In step S6, the portion of the 3D tissue sample which extend out of the adjustable opening, is cut at the adjustable opening.

By way of repeating steps S5 and S6, a region of interest may be separated out of the biopsy sample.

In step S7, a further analysis of the region of interest may be performed.

All steps described in connection with the method of processing a 3D biopsy sample may be standardized and thus performed automatically. When considering a computer-controlled handling device, even step 1, i.e. the inserting of the biopsy tube 80 into the tube receptacle 60 may be performed automatically. Consequently, a processing unit 100 is schematically shown in figure 1 as part of the system. A computer program element including sets of instructions and being executable on the processing unit 100, may be provided on a suitable medium such as an optical storage medium or a solid-state medium supplied together with or as part of the processor, but may also be distributed in other forms, such as via the Internet or other wired or wireless telecommunication systems. When executed on the processing unit 100, the sets of instructions of the computer program element may cause the device for processing a 3-D biopsy sample to perform the described method steps in an appropriate sequence.

### LIST OF REFERENCE SIGNS:

- 10: reagent reservoir
- 12: first tissue processing fluid
- 14: second tissue processing fluid
- 16: third tissue processing fluid
- 18: fourth tissue processing fluid
- 20: manifold
- 22: supply line
- 30: pumping device
- 40: valve
- 50: plunger
- 60: tube receptacle
- 70: fixing ring
- 80: biopsy tube
- 82: biopsy sample
- 84: region of interest (ROI)
- 90: adjustable opening
- 91, 92, 93, 94: diaphragm element
- 95: opening
- 96: sharp edge
- 98: cutter
- 100: processing unit
- 102: radiation source
- 104: radiation detector

## Claims

1. A system for processing a 3D tissue sample, comprising:
a reservoir (10) for a tissue processing fluid (12, 14, 16, 18),
a supply line (22),
an opening (90), and
a retainer (60) for a biopsy tube (80) with two open ends,
wherein the retainer (60) is configured to hold the biopsy tube (80) between the supply line (22) and the opening (90), such that the tissue processing fluid (12, 14, 16, 18) can flow from the reservoir (10), through the supply line (22) under pressure into a first open end of the biopsy tube (80), through the biopsy tube (80), and out of the second open end of the biopsy tube (80) and through the opening (90), wherein the opening (90) is an adjustable opening having a closed configuration, a partially open configuration and an open configuration.

2. The system of claim 1, comprising a plurality of reservoirs for tissue processing fluids (12, 14, 16, 18), the system further comprising a fluid manifold (20) connecting one of the plurality of reservoirs to the supply line (22).

3. The system of claim 2, wherein the plurality of tissue processing fluids (12, 14, 16, 18) include at least one clearing agent and at least one staining agent.

4. The system of any one of claims 1 to 3, further comprising a plunger (50) adapted to push either biopsy tissue (82) out of the biopsy tube (80) and through the adjustable opening (90) or the biopsy tube (80) through the adjustable opening (90).

5. The system of any one of claim 1 to 4, further comprising a cutting element (96, 98) for cutting the biopsy tissue.

6. The system of claim 5, wherein the cutting element is an element out of the group consisting of a laser, a microtome cutter, and a diaphragm.

7. The system of any one of claims 1 to 5, wherein the adjustable opening (90) comprises a diaphragm.

8. The system of any one of claims 1 to 7, further comprising a pumping device (30) for supplying the tissue processing fluid (12, 14, 16, 18) under pressure into the biopsy tube (80), wherein the pressure under which the tissue processing fluid is supplied is between 2 bar and 6 bar, preferably between 4 bar and 5 bar.

9. The system of any one of claims 1 to 8, further comprising an analyzing unit (102, 104) for analyzing the processed biopsy tissue.

10. A method of processing a 3D tissue sample, comprising the steps of
- retaining a biopsy tube (80) including the 3D tissue sample such that a first open end of the biopsy tube (80) is arranged at a supply line (22) for supplying a tissue processing fluid (12, 14, 16, 18) and that a second open end of the biopsy tube (80) is arranged adjacent to an adjustable opening (90),
- forcing a tissue processing fluid (12, 14, 16, 18) from a reservoir (10) through the supply line (22) and the first open end of the biopsy tube (80) into the biopsy tube (80) and out of the second open end of the biopsy tube (80) and through the adjustable opening (90), wherein the adjustable opening (90) is in a partially open configuration.

11. The method of claim 10, further comprising the step of selecting one tissue processing fluid out of a plurality of tissue processing fluids (12, 14, 16, 18).

12. The method of any one of claims 10 and 11, further comprising the step of shifting the 3D tissue sample out of the biopsy tube (80) and through the adjustable opening (90).

13. The method of any one of claims 10 to 12, further comprising the step of cutting the 3D tissue sample at the adjustable opening (90).

14. The method of any one of claims 10 to 13, further comprising the step of analyzing the processed 3D tissue sample.

15. A computer program element comprising sets of instructions, wherein, when the sets of instructions are executed on a processing unit (100) of the system of claim 1, the sets of instructions cause the system to perform the method of claim 10.

## Patentansprüche

1. System zur Verarbeitung einer 3D-Gewebeprobe, umfassend:
ein Reservoir (10) für eine Gewebeverarbeitungsflüssigkeit (12, 14, 16, 18),
eine Versorgungsleitung (22),
eine Öffnung (90) und
einen Halter (60) für ein Biopsieröhrchen (80) mit zwei offenen Enden,
wobei der Halter (60) konfiguriert ist, um den Biopsieröhrchen (80) zwischen der Versorgungsleitung (22) und der Öffnung (90) zu halten, so dass die Gewebeverarbeitungsflüssigkeit (12, 14, 16, 18) aus dem Reservoir (10) durch die Versorgungsleitung (22) unter Druck in ein erstes offenes Ende des Biopsieröhrchens (80), durch das Biopsieröhrchen (80) und aus dem zweiten offenen Ende des Biopsieröhrchens (80) und durch die Öffnung (90) fließen kann,
wobei die Öffnung (90) eine einstellbare Öffnung mit einer geschlossenen Konfiguration, einer teilweise offenen Konfiguration und einer offenen Konfiguration ist.

2. System nach Anspruch 1, umfassend mehrere Reservoire für Gewebeverarbeitungsflüssigkeiten (12, 14, 16, 18), wobei das System ferner einen Fluidverteiler (20) umfasst, der eines der mehreren Reservoire mit der Versorgungsleitung (22) verbindet.

3. System nach Anspruch 2, wobei die Vielzahl von Gewebeverarbeitungsflüssigkeiten (12, 14, 16, 18) mindestens ein Klärmittel und mindestens ein Färbemittel umfasst.

4. System nach einem der Ansprüche 1 bis 3, ferner umfassend einen Kolben (50), der dazu ausgelegt ist, entweder Biopsiegewebe (82) aus dem Biopsieröhrchen (80) und durch die einstellbare Öffnung (90) oder das Biopsieröhrchen (80) durch die einstellbare Öffnung (90) zu drücken.

5. System nach einem der Ansprüche 1 bis 4, ferner umfassend ein Schneidelement (96, 98) zum Schneiden des Biopsiegewebes.

6. System nach Anspruch 5, wobei das Schneidelement ein Element aus der Gruppe ist, das aus einem Laser, einem Mikrotomschneider und einer Membran besteht.

7. System nach einem der Ansprüche 1 bis 5, wobei die einstellbare Öffnung (90) eine Membran umfasst.

8. System nach einem der Ansprüche 1 bis 7, ferner umfassend eine Pumpvorrichtung (30) zur Versorgung der Gewebeverarbeitungsflüssigkeit (12, 14, 16, 18) unter Druck in das Biopsieröhrchen (80), wobei der Druck, unter dem die Gewebeverarbeitungsflüssigkeit versorgt wird, zwischen 2 bar und 6 bar, vorzugsweise zwischen 4 bar und 5 bar liegt.

9. System nach einem der Ansprüche 1 bis 8, ferner umfassend eine Analyseeinheit (102, 104) zum Analysieren des verarbeiteten Biopsiegewebes.

10. Verfahren zum Verarbeiten einer 3D-Gewebeprobe, umfassend die Schritte von
- Halten eines Biopsieröhrchens (80) einschließlich der 3D-Gewebeprobe, so dass ein erstes offenes Ende des Biopsieröhrchens (80) an einer Versorgungsleitung (22) zur Versorgung einer Gewebeverarbeitungsflüssigkeit (12, 14, 16, 18) angeordnet ist, und dass ein zweites offenes Ende des Biopsieröhrchens (80) neben einer einstellbaren Öffnung (90) angeordnet ist,
- Zwingen einer Gewebeverarbeitungsflüssigkeit (12, 14, 16, 18) aus einem Reservoir (10) durch die Versorgungsleitung (22) und das erste offene Ende des Biopsieröhrchens (80) in das Biopsieröhrchen (80) und aus dem zweiten offenen Ende des Biopsieröhrchens (80) und durch die einstellbare Öffnung (90), wobei sich die einstellbare Öffnung (90) in einer teilweise offenen Konfiguration befindet.

11. Verfahren nach Anspruch 10, ferner umfassend den Schritt des Auswählens einer Gewebeverarbeitungsflüssigkeit aus einer Vielzahl von Gewebeverarbeitungsflüssigkeiten (12, 14, 16, 18).

12. Verfahren nach einem der Ansprüche 10 und 11, ferner umfassend den Schritt des Verschiebens der 3D-Gewebeprobe aus dem Biopsieröhrchen (80) und durch die einstellbare Öffnung (90).

13. Verfahren nach einem der Ansprüche 10 bis 12, ferner umfassend den Schritt des Schneidens der 3D-Gewebeprobe an der einstellbaren Öffnung (90).

14. Verfahren nach einem der Ansprüche 10 bis 13, ferner umfassend den Schritt des Analysierens der verarbeiteten 3D-Gewebeprobe.

15. Computerprogrammelement, umfassend Befehlssätze, wobei, wenn die Befehlssätze auf einer Verarbeitungseinheit (100) des Systems nach Anspruch 1 ausgeführt werden, die Befehlssätze das System veranlassen, das Verfahren nach Anspruch 10 auszuführen.

## Revendications

1. Système de traitement d'un échantillon de tissu 3D, comprenant:
un réservoir (10) pour un fluide de traitement de tissu (12, 14, 16, 18),
une ligne d'alimentation (22),
une ouverture (90), et
un dispositif de retenue (60) pour un tube de biopsie (80) à deux extrémités ouvertes,
où le dispositif de retenue (60) est configuré pour maintenir le tube de biopsie (80) entre la ligne d'alimentation (22) et l'ouverture (90), de telle sorte que le fluide de traitement du tissu (12, 14, 16, 18) peut s'écouler du réservoir (10), à travers la ligne d'alimentation (22) sous pression dans une première extrémité ouverte du tube de biopsie (80), à travers le tube de biopsie (80), et hors du deuxième extrémité ouverte du tube de biopsie (80) et à travers l'ouverture (90),
où l'ouverture (90) est une ouverture réglable ayant une configuration fermée, une configuration partiellement ouverte et une configuration ouverte.

2. Système selon la revendication 1, comprenant une pluralité de réservoirs pour les fluides de traitement du tissu (12, 14, 16, 18), le système comprenant en outre un collecteur de fluide (20) reliant l'un de la pluralité de réservoirs à la ligne d'alimentation (22).

3. Système selon la revendication 2, dans lequel la pluralité de fluides de traitement du tissu (12, 14, 16, 18) comprend au moins un agent de nettoyage et au moins un agent colorant.

4. Système selon l'une quelconque des revendications 1 à 3, comprenant en outre un piston (50) adapté pour pousser soit le tissu de biopsie (82) hors du tube de biopsie (80) et à travers l'ouverture réglable (90) soit le tube de biopsie (80) à travers l'ouverture réglable (90).

5. Système selon l'une quelconque des revendications 1 à 4, comprenant en outre un élément coupant (96, 98) pour couper le tissu de biopsie.

6. Système selon la revendication 5, dans lequel l'élément coupant est un élément dans le groupe constitué par un laser, un couteau de microtome, et un diaphragme.

7. Système selon l'une quelconque des revendications 1 à 5, dans lequel l'ouverture réglable (90) comprend un diaphragme.

8. Système selon l'une quelconque des revendications 1 à 7, comprenant en outre un dispositif de pompage (30) pour fournir le fluide de traitement du tissu (12, 14, 16, 18) sous pression dans le tube de biopsie (80), où la pression sous laquelle le fluide de traitement du tissu est fourni est comprise entre 2 bars et 6 bars, de préférence entre 4 bars et 5 bars.

9. Système selon l'une quelconque des revendications 1 à 8, comprenant en outre une unité d'analyse (102, 104) pour analyser le tissu de biopsie traité.

10. Procédé de traitement d'un échantillon de tissu 3D, comprenant les étapes de
- retenir un tube de biopsie (80) comprenant l'échantillon de tissu 3D de telle sorte qu'une première extrémité ouverte du tube de biopsie (80) est disposée au niveau d'une ligne d'alimentation (22) pour alimenter un fluide de traitement de tissu (12, 14, 16, 18) et qu'une deuxième extrémité ouverte du tube de biopsie (80) est disposée à côté d'une ouverture réglable (90),
- forcer un fluide de traitement de tissu (12, 14, 16, 18) depuis un réservoir (10) à travers la ligne d'alimentation (22) et la première extrémité ouverte du tube de biopsie (80) dans le tube de biopsie (80) et hors de la deuxième extrémité ouverte du tube de biopsie (80) et à travers l'ouverture réglable (90), où l'ouverture réglable (90) est dans une configuration partiellement ouverte.

11. Procédé selon la revendication 10, comprenant en outre l'étape de sélection d'un fluide de traitement de tissu parmi une pluralité de fluides de traitement de tissu (12, 14, 16, 18).

12. Procédé selon l'une quelconque des revendications 10 et 11, comprenant en outre l'étape de déplacer l'échantillon de tissu 3D hors du tube de biopsie (80) et à travers l'ouverture réglable (90).

13. Procédé selon l'une quelconque des revendications 10 à 12, comprenant en outre l'étape de couper l'échantillon de tissu 3D au niveau de l'ouverture réglable (90).

14. Procédé selon l'une quelconque des revendications 10 à 13, comprenant en outre l'étape d'analyse de l'échantillon de tissu 3D traité.

15. Élément de programme informatique comprenant des ensembles d'instructions, dans lequel, lorsque les ensembles d'instructions sont exécutés sur une unité de traitement (100) du système selon la revendication 1, les ensembles d'instructions amènent le système à exécuter le procédé selon la revendication 10.
